# EUROPEAN PATENT APPLICATION

(11) **EP 1 052 123 A1**
(43) Date of publication of application: **15.11.2000**
(21) Application number: 00303866.8
(22) Date of filing: 09.05.2000
(51) Int. Cl.: B60G 11/113, B60G 11/46, F16F 1/368

(54) **Axle mounting assembly and suspension arm assembly including said assembly**

(30) Priority: 10.05.1999 GB 9910705
(71) Applicant: Meritor Heavy Vehicle Systems Limited, Llay, Wrexham, Clwyd LL12 0PB (GB)
(72) Inventor: Smith, Gary Lee, Summerhill, Wrexham (GB)
(74) Representative: Stonehouse, Sidney William

(57) **Abstract**

An axle mounting assembly, e.g. for mounting an axle on a longitudinal member such as a leaf spring (2) in a trailer suspension, comprises a spring seat (12) and a clamp plate (14) which secure to the longitudinal member and each have location surfaces (41, 44), such as recesses and/or ribs or lugs, which engage the longitudinal member and locate the spring seat and clamp plate laterally on the member. Shearing loads transmitted in use by an axle through the spring seat (12) are reacted therefore by the longitudinal member (2). The spring seat (12) and/or clamp plate (14) may be located longitudinally on the longitudinal member by means of dowels (13, 15) engaged in recesses (11) in the components. Friction modifiers (16, 17) e.g. of polyurethane 499, may be inserted between the longitudinal member and the spring seat and the clamp plate to reduce fretting of the member in use.

## Description

This invention relates to an axle mounting assembly for or included in a suspension arm assembly in which a longitudinal member, for example a leaf spring, is adapted to carry an axle or stub axle for a vehicle.

A mounting for an axle on a leaf spring, for example in a suspension for an articulated trailer, conventionally comprises a clamp plate and a spring seat which are clamped together by means of U-bolts, one above and one below the leaf spring intermediate its ends and substantially in vertical alignment with one another. Thin laminar inserts, known as friction modifiers, are interposed between the clamp plate and the leaf spring and between the spring seat and the leaf spring to reduce fretting of the leaf spring. Such fretting can lead to early fatigue failure of the leaf spring.

This design was developed for use with mechanical suspensions and was carried over to air suspensions which, over a period of some years, have largely superseded the mechanical suspensions.

Air suspensions have been developed to cater for higher loadings than obtained for mechanical suspensions, on which the interfaces/friction modifiers were subjected to lateral and/or longitudinal loading. With air suspensions the loadings are not only higher but skewing loads are experienced as well as lateral and longitudinal loads.

The purpose of this invention is to overcome limitations of the existing design.

According to a first aspect, the present invention consists in an axle mounting assembly for a suspension arm assembly comprising a spring seat, a clamp plate and means to secure the spring seat and the clamp plate on a longitudinal member, characterised in that the spring seat and clamp plate each have location surfaces which in use engage the longitudinal member and locate the respective spring seat and clamp plate laterally with respect to the longitudinal member, whereby skewing loads transmitted in use by an axle through the spring seat are reacted by the longitudinal member.

The location surfaces may comprise upstanding ribs or lugs on, or by recesses in, the spring seat and/or the clamp plate between or within which the longitudinal member can be received.

The axle mounting assembly may include the longitudinal member to which the spring seat and the clamp plate are secured.

The longitudinal member may be a leaf spring.

The longitudinal member may have, intermediate its ends, a recess in each of upper and lower surfaces thereof. The spring seat and the clamp plate may each also have a corresponding recess, and a dowel or like locating member may be engaged in the corresponding recesses of the longitudinal member and the spring seat and the clamp plate whereby the spring seat and the clamp plate are located longitudinally with respect to the longitudinal member.

The recesses in the longitudinal member may be in vertical alignment, or non-aligned vertically, and are preferably on a longitudinal centreline of the member.

The recesses may comprise through holes, in which event a single dowel may be used for relative location of the longitudinal member, spring seat and clamp plate.

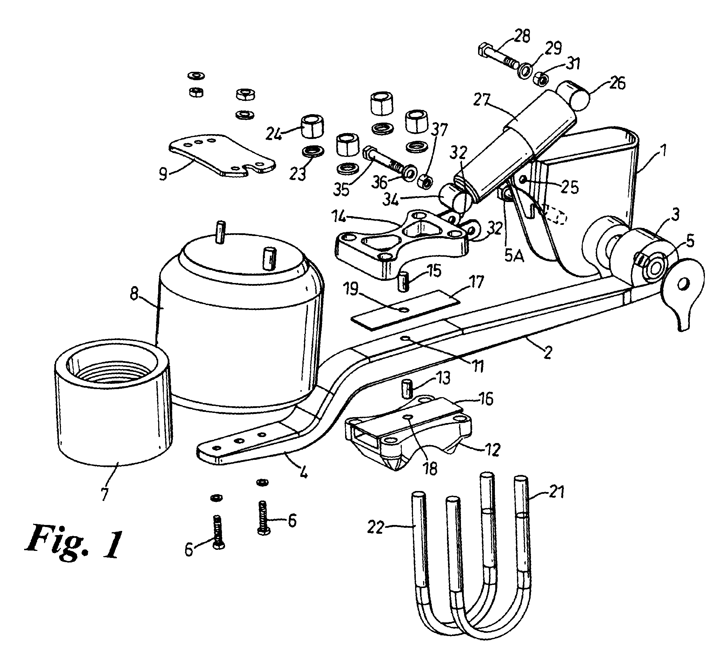

Friction modifiers, perforated to accommodate the dowel or dowels, as described with reference to Figure 1, may be fitted between the longitudinal member and the spring seat and clamp plate components.

The friction modifiers preferably comprise shear compliant membranes, made for example of polyurethane 499, such as HYPERLAST 2874/502 of Polyurethane Products Ltd. The material is chosen such that its hardness is of a value that, in use, will not damage the surface of the longitudinal member, nor will the material extrude under load.

According to a second aspect, the present invention consists in a suspension arm assembly characterised in that it has an axle mounting assembly in accordance with the foregoing first aspect of the invention.

According to a third aspect, the present invention consists in an air suspension assembly characterised in that it comprises a suspension arm assembly in accordance with the foregoing second aspect of the invention which includes a longitudinal member, a hanger bracket to which the longitudinal member is connected for pivotal movement and an air spring carried by the longitudinal member.

An embodiment of the invention will now be described by way of example only with reference to the accompanying drawings, in which:
**Figure 1** is an exploded view of an air suspension assembly embodying the present invention,
**Figure 2** is a plan view from above of a spring seat,
**Figure 3** is a side view and **Figure 4** is a plan view from below of the spring seat of Figure 1,
**Figure 5** is a longitudinal section through the spring seat,
**Figure 6** is an end view of the spring seat,
**Figure 7** is a section on line A-A of Figure 4,
**Figure 8** is a side elevation of a clamp plate,
**Figure 9** is a plan view from above of the clamp plate of Figure 8, and
**Figure 10** is a section on line B-B of Figure 9.

Referring to Figure 1, the air suspension assembly includes a suspension arm assembly and comprises a hanger bracket 1, a leaf spring 2 having an eye 3 at one end and a platform 4 at the other end. The eye 3, containing a bearing bush 5, is inserted between opposed sides of the bracket 1 which has through holes adjacent its lower end for a bolt 5A which passes through the bush to secure the leaf spring 2 for pivotal movement.

The platform 4 has through holes for bolts 6 to secure a piston 7 for an air spring 8. The air spring is adapted to be secured to a vehicle by way of an adapter plate 9.

The leaf spring 2 has vertically aligned recesses 11 in its upper and lower surfaces. An axle mounting member in the form of a spring seat 12 has a corresponding recess in its upper face whereby it is located, on assembly, relative to the leaf spring 2 by a dowel 13 engaged in the respective recesses.

Similarly, a clamp plate in the form of a top plate 14 has a corresponding recess in its lower surface whereby it is located, on assembly, relative to the leaf spring 2 by a dowel 15 engaged in the respective recesses.

Thin, shear compliant, laminar inserts 16, 17 are interposed as friction modifiers between the leaf spring 2 and the spring seat 12 and between the leaf spring 2 and the top plate 14 to reduce fretting of the leaf spring in use. The inserts have holes 18, 19 through which the dowels 13, 15 can pass.

A cylindrical axle beam or a stub axle (not shown) may be engaged with the spring seat 12 and the assembly may be completed by two U bolts 21, 22 which engage the underside of the axle beam or stub axle and pass upwardly through holes at the corners of the spring seat 12 and the top plate 14 to be secured with washers 23 and nuts 24.

The hanger bracket 1 has opposed spaced lugs 25 between which a bushed eye 26 at an upper end of a telescopic shock absorber 27 is received for pivotal securing by a bolt 28, washer 29 and nut 31.

The top plate 14 also has opposed spaced lugs 32. A bushed eye 34 at a lower end of shock absorber 27 is entered between the lugs 32 to be pivotally secured by a bolt 35, washer 36 and nut 37.

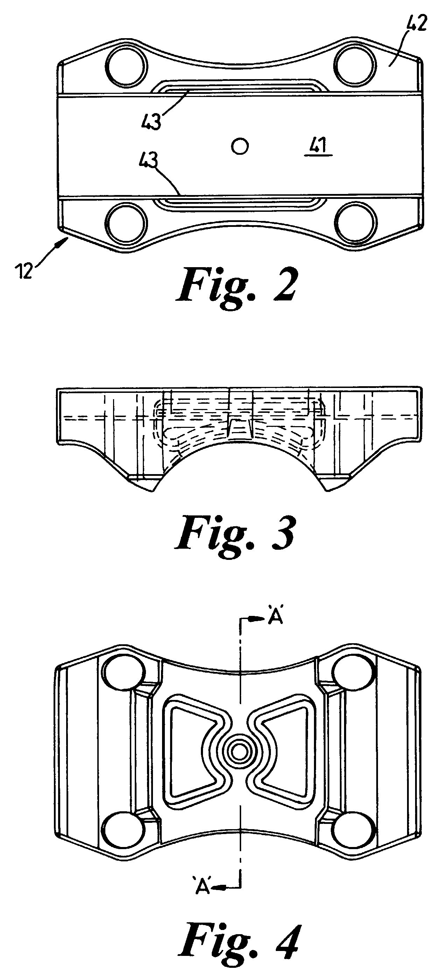

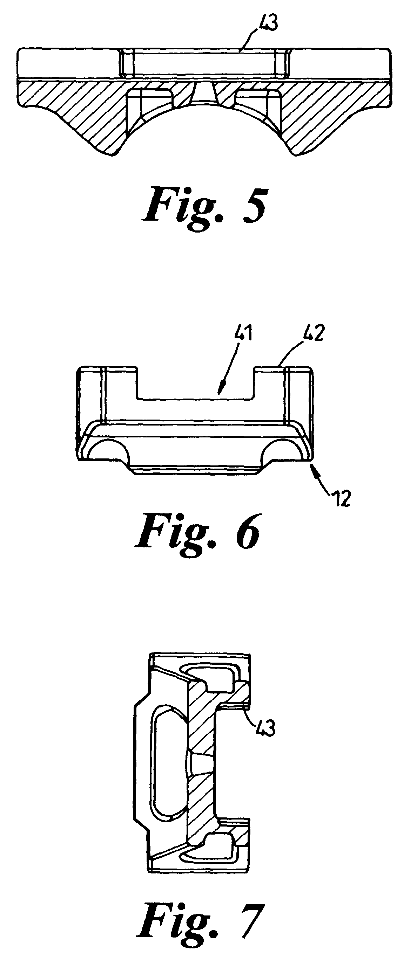

Referring now to Figures 2 to 7 of the drawings, a recess 41 is formed in and runs the length of the upper surface 42 of the spring seat 12. The recess 41, as seen in Figures 2, 5 and 7 is parallel-sided and widened over its centre section 43. The leaf spring 2 is received into the recess 41 whereby it is enabled, in use, to react skewing loads imparted by an axle beam or stub axle carried by the spring seat 12.

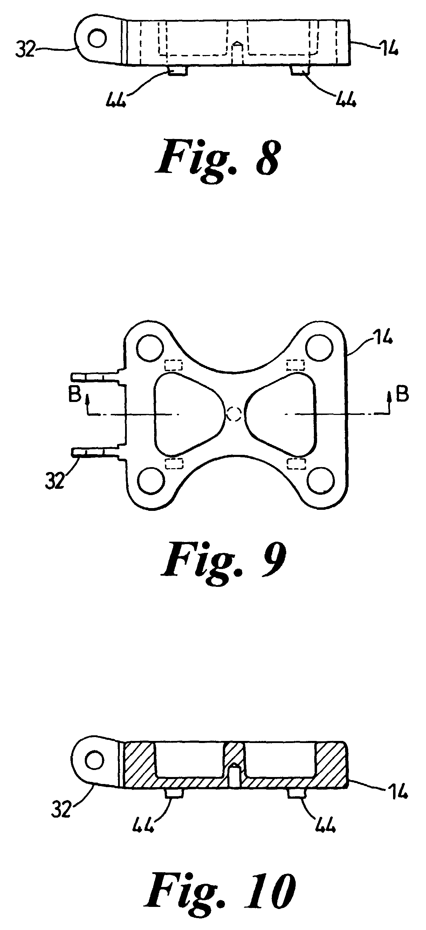

Referring now to Figures 8 to 10 of the drawings, the top plate 14 has four depending ribs 44 at its underside between which the leaf spring 2 is received whereby the top plate is prevented from skewing, in use, relative to the leaf spring.

As has been described with reference to Figure 1, the U bolts 21, 22 secure the spring seat 12, the leaf spring 2 and the top plate 14 together, together with the laminar inserts 16, 17, and skewing loads in use are transmitted from the axle beam or stub axle to the leaf spring through the spring seat and top plate assembly whereby the leaf spring reacts these loads.

The invention has been described with reference to a cylindrical axle beam but is, of course, equally applicable to an axle beam which is of non-circular section, for example of square section.

## Claims

1. An axle mounting assembly for a suspension arm assembly comprising a spring seat (12), a clamp plate (14) and means (21,22,23,24) to secure the spring seat and the clamp plate on a longitudinal member, characterised in that the spring seat and clamp plate each have location surfaces (41,44) which in use engage a longitudinal member and locate the respective spring seat and clamp plate laterally with respect to the longitudinal member, whereby skewing loads transmitted in use by an axle through the spring seat are reacted by the longitudinal member.

2. An axle mounting assembly as claimed in claim 1 characterised in that the location surfaces comprise upstanding ribs, lugs or like protrusions (44) on at least one of the spring seat (12) and clamp plate (14).

3. An axle mounting assembly as claimed in claim 1 characterised in that the location surfaces comprise a recess (41) in at least one of the spring seat (12) and clamp plate (14).

4. An axle mounting assembly as claimed in any preceding claim characterised in that it includes a longitudinal member (2) to which the spring seat (12) and the clamp plate (14) are secured.

5. An axle mounting assembly as claimed in claim 4 characterised in that the longitudinal member (2) has, intermediate its ends, a recess (11) in each of upper and lower surfaces thereof, and the spring seat (12) and the clamp plate (14) each have a corresponding recess in a face thereof which, on assembly, lies adjacent the respective upper and lower surfaces of the longitudinal member, and dowels or like locating members (13,15) are engaged between the corresponding recesses whereby the spring seat and clamp plate are located longitudinally with respect to the longitudinal member.

6. An axle mounting assembly as claimed in claim 5 characterised in that the recesses in the longitudinal member (2) are substantially in vertical alignment.

7. An axle mounting assembly as claimed in claim 6, characterised in that the recesses comprise a through hole in the longitudinal member (2), whereby a single dowel or like member (13,15) locates the spring seat (12) and clamp plate (14) relative to the longitudinal member.

8. An axle mounting assembly as claimed in any of claims 4 to 7 characterised in that the recesses (11) in the longitudinal member (2) are situated on a longitudinal centreline of the member.

9. An axle mounting assembly as claimed in any of claims 4 to 8 characterised in that a friction modifier (16) is engaged between the spring seat (12) and the longitudinal member (2).

10. An axle mounting assembly as claimed in any of claims 4 to 9 characterised in that a friction modifier (17) is engaged between the clamp plate (14) and the longitudinal member (2).

11. An axle mounting assembly as claimed in claim 9 or claim 10 characterised in that the friction modifier (16,17) is made of polyurethane 499.

12. An axle mounting assembly as claimed in any of claims 4 to 11 characterised in that the longitudinal member (2) is a leaf spring.

13. A suspension arm assembly characterised in that it has an axle mounting assembly as claimed in any preceding claim.

14. An air suspension assembly comprising a suspension arm assembly having an axle mounting assembly, a hanger bracket (1) to which a longitudinal member (2) is connected for pivotal movement and an air spring (8) carried by the longitudinal member, characterised in that the axle mounting assembly is as claimed in any of claims 4 to 12.
